# EUROPÄISCHE PATENTSCHRIFT

(11) **EP 3 161 390 B1**
(45) Veröffentlichungstag und Bekanntmachung des Hinweises auf die Patenterteilung: **07.08.2019**
(21) Anmeldenummer: 10726872.4
(22) Anmeldetag: 17.02.2010
(51) Int. Cl.: H02S 20/24, F24S 25/00, F24S 25/16, F24S 25/60, F24S 25/615

(54) **SCHRÄGANORDNUNG VON PV-MODULEN AUF FLACHDÄCHERN**
INCLINED ARRANGEMENT OF PV MODULES ON FLAT ROOFS
AGENCEMENT DE MODULES PHOTOVOLTAÏQUES EN BIAIS SUR TOITURES PLATES

(30) Priorität: 17.02.2009 DE 202009002208 U
(43) Veröffentlichungstag der Anmeldung: 03.05.2017
(73) Patentinhaber: Schletter International B.V., 1077 ZX Amsterdam (NL)
(72) Erfinder: BUB, Fabian, 80469 München (DE)
(74) Vertreter: Thum, Bernhard
(86) Internationale Anmeldenummer: PCT/DE2010/000178
(87) Internationale Veröffentlichungsnummer: WO 2010/094271

(56) Entgegenhaltungen:
- WO-A1-2008/105296
- DE-A1-102006 028 494
- DE-A1-102008 028 108
- DE-U1- 29 815 134
- DE-U1-202006 009 884
- DE-U1-202008 007 838
- JP-A- 2006 016 790

## Beschreibung

Die Erfindung betrifft eine Schräganordnung von Photovoltaik-Modulen auf Flachdächern.

Bei Flachdächern unter 10° Neigung ist eine dachparallele Montage von PV-Modulen wegen zu geringer Erträge und wegen ungenügender Selbstreinigung nur bedingt geeignet. Und herkömmliche Dachaufständerungen, die eine ertragsoptimierte Neigung von beispielsweise 30 ° bieten, sind aufgrund ihrer Komplexität in vielen Fällen nicht mehr wirtschaftlich.

Aus DE 20 2008 007 838 U1 ist eine Schräganordnung von PV-Modulen auf flachen Trapezblechdächern bekannt, die ein geringes Plus an Neigung bietet und das PV-Modul an Stellen geringer Durchbiegung trägt. Die Schräganordnung umfasst ein vorderes und ein hinteres Tragprofil, die mittels Halter in einem Parallelabstand auf dem Trapezblechdach montiert sind. Die vorderen Halter dieser Schräganordnung können als sogenannte Trapezblechschellen ausgeführt sein und weisen Montageflansche auf, die in dem gewünschten Neigungswinkel gegenüber dem Trapezblech angestellt sind und auf denen das vordere Tragprofil unmittelbar montiert ist. Eine Abstützung für das hintere Tragprofil sitzt entweder auf Haltern derselben Bauart schräg auf oder bietet bei dachparallelen Haltern selbst eine entsprechende Winkelanstellung.

Aufgabe der Erfindung ist es, eine Schräganordnung der vorgenannten Art zu schaffen, die mit wenigen einfachen Komponenten herstellungs- und montagegerecht zu realisieren ist und das PV-Modul dennoch statisch günstig trägt.

Die Lösung dieser Aufgabe erfolgt mit der im Anspruch 1 angegebenen Schräganordnung von PV-Modulen auf einem Flachdach. Diese Schräganordnung umfasst wie aus dem Stand der Technik bekannt ein vorderes und ein hinteres Tragprofil, die mittels am Flachdach befestigter Halter in einem Parallelabstand auf dem Flachdach montiert sind. Das vordere und das hintere Tragprofil ist hierbei jeweils mit seiner Unterseite auf mindestens zwei der Halter dachparallel aufgesetzt. Mit ihren Oberseiten tragen das vordere und das hintere Tragprofil zusammen mindestens ein PV-Modul schräg in einem Winkel gegenüber dem Flachdach, wobei zwischen der Unterseite und der Oberseite des hinteren Tragprofils eine größere Stützhöhe vorgesehen ist als beim vorderen Tragprofil. Eine wesentliche Neuerung besteht darin, dass die Oberseiten beider Tragprofile in den Bereichen, in denen das PV-Modul dort aufliegt, im vorgenannten Winkel gegenüber den Unterseiten geneigt sind. Außerdem ist erfindungsgemäß in der Unterseite und/oder in der Oberseite mindestens eines Tragprofils eine hinterschnittene Längsnut integriert.

Tragen die Tragprofile das PV-Modul nicht an dessen Ecken, sondern wie bevorzugt statisch günstig an Auflagestellen geringer Durchbiegung, bietet die erfindungsgemäße Schräganordnung geometrisch bedingt lediglich ein vergleichsweise geringes Plus an Neigung, vorzugsweise zwischen 5° und 8°. Da die Schräganordnung jedoch mit nur wenigen einfachen Komponenten aufgebaut werden kann, ist der Herstellungs- und Montageaufwand gegenüber dachparallelen Lösungen einerseits rentabel und andererseits deutlich kostengünstiger als herkömmliche Dachaufständerungen.

In einer besonders vorteilhaften Ausführungsform sind die Oberseiten der Tragprofile gerundet, sodass das PV-Modul dort tangential oder im Wesentlichen tangential aufliegen kann. Dadurch können die Tragprofile das PV-Modul auch in mehreren unterschiedlichen Winkeln statisch günstig tragen. Die Rundungen der Oberseiten weisen hierzu vorzugsweise einen Radius im Bereich zwischen 500 mm und 700 mm auf

Nachfolgend wird ein Ausführungsbeispiel der Erfindung anhand von Zeichnungen näher erläutert. Es zeigen:
- **Fig. 1**: eine Perspektivansicht einer Schräganordnung von PV-Modulen auf dem Trapezblech eines Flachdachs,
- **Fig. 2**: eine Seitenansicht der Schräganordnung gemäß **Fig. 1** mit Blick auf die Langseite eines PV-Moduls,
- **Fig. 3 und Fig. 4**: zwei Seitenansichten wie **Fig. 2** jedoch im Detail an Tragprofilen der Schräganordnung gemäß **Fig. 1****,**
- **Fig. 5**: einen Querschnitt durch ein Tragprofil der Schräganordnung gemäß **Fig. 1****,**
- **Fig. 6**: schematische Seitenansichten drei unterschiedlicher Anordnungs-möglichkeiten der Schräganordnung gemäß **Fig. 1****.**

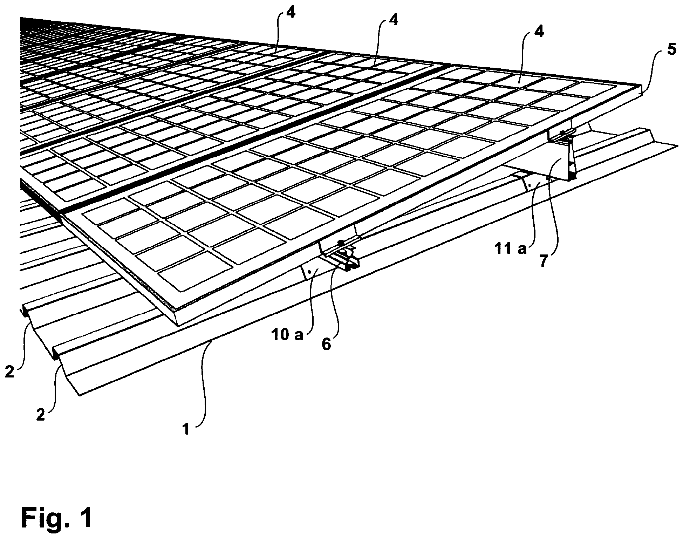

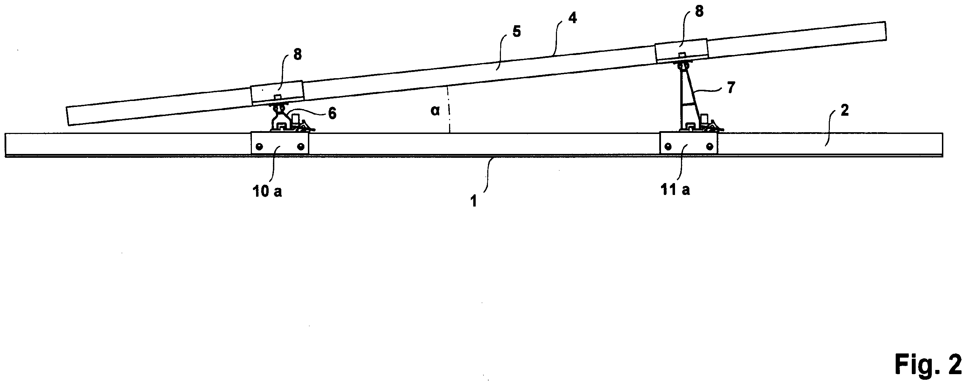

Die Schräganordnung von PV-Modulen gemäß **Fig. 1** ist auf dem Trapezblech **1** eines nicht weiter dargestellten Flachdachs installiert. Das Trapezblech **1** weist wie üblich mehrere parallel beabstandete Rippen **2** mit trapezförmigem Querschnitt auf und ist zum Abfließen von Regenwasser um wenige Grade geneigt. Wie zusammen mit der Seitenansicht gemäß **Fig. 2** gut zu erkennen ist, umfasst die Schräganordnung zwei Tragprofile **6** und **7,** die in einem Parallelabstand quer zu den Rippen **2** des Trapezblechs **1** verlaufen. Die Tragprofile **6** und **7** sind jeweils auf mehreren sogenannten Trapezblechschellen **10 a** bzw. **11 a** montiert, welche wiederum auf ausgewählten Rippen **2** paarweise befestigt sind. Auf den Tragprofilen **6** und **7** sind mehrere jeweils von einem Rahmen **5** eingefasste PV-Module **4** angeordnet. Hierzu sind an den Langseiten der PV-Module **4** jeweils zwei schraubbare Klemmen **8** vorgesehen, welche die Rahmen **5** der PV-Module **4** auf die Tragprofile **6** und **7** spannen. Zu erkennen ist weiter, dass die Tragprofile **6** und **7** zwischen den Trapezblechschellen **10 a** bzw. **11 a** und dem Rahmen **5** unterschiedliche Stützhöhen aufweisen. Der Unterschied beträgt in diesem Ausführungsbeispiel rund 80 mm, sodass die PV-Module **4** bei einem vorgegebenen Parallelabstand zwischen den beiden Tragprofilen **6** und **7** von hier ca. 800 mm in einem Winkel **α** von etwa 6° gegenüber dem Trapezblech **1** geneigt sind. Aus Gründen der Klarheit wird wie im Stand der Technik diejenige Seite der PV-Module **4,** welche bezüglich des Trapezblechs **1** am tiefsten liegt, als die vordere definiert, sodass im Folgenden das Tragprofil **6** das vordere und das Tragprofil **7** das hintere ist. Beide Tragprofile **6** und **7** sind bevorzugt als Strangpressprofile aus Leichtmetall extrudiert.

In **Fig. 1** und **Fig. 2** ist außerdem zu erkennen, dass die Tragprofile **6** und **7** die Rahmen **5** nicht an den Ecken, sondern aus statischen Gründen an Auflagestellen geringer Durchbiegung tragen. Diese Auflagestellen sind an den Langseiten der Rahmen **5** vorgesehen und gemäß der Theorie von Bessel jeweils um rund ein Viertel bis ein Fünftel der Länge der Langseiten nach innen versetzt, wodurch sich bei einer Modullänge von hier ca. 1.600 mm der zuvor angegebene Parallelabstand ergibt. Unter Berücksichtigung dieser Auflagestellen geringer Durchbiegung sind größere Werte für den Winkel **α** von erheblich mehr als 6° kaum möglich, da andernfalls entweder die Vorderkante des Rahmens **5** an den Rippen **2** aufliegen würde oder die Tragprofile **6** und **7** größere und damit materialaufwendigere Abstände zum Trapezblech **1** bieten müssten. Vor diesem Hintergrund haben sich auch bei Modulseitenlängen von über 1.300 mm geringe Stützhöhen im Bereich um etwa 50 mm für das vordere Tragprofil **6** und im Bereich um etwa 130 mm für das hintere Tragprofil **7** als zweckmäßig erwiesen. Entsprechend ergeben sich für den Winkel **α** im Zusammenhang mit dem zuvor genannten Parallelabstand vergleichsweise geringe Werte zwischen 5 und 8°.

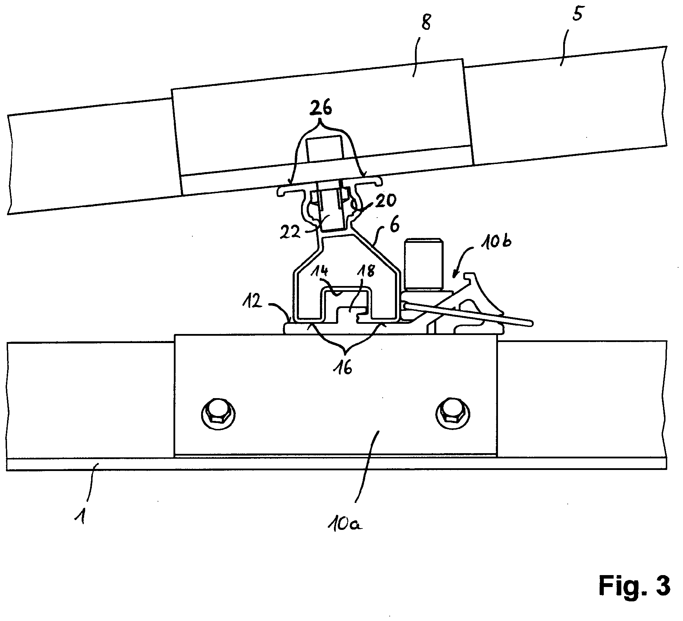

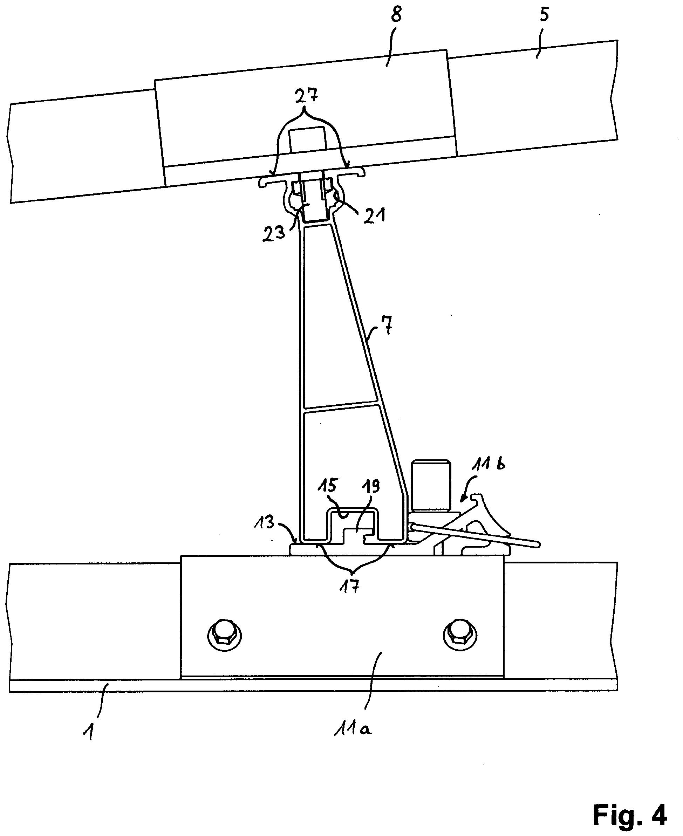

Aus **Fig. 3** und **Fig. 4** ist die Schräganordnung am vorderen Tragprofil **6** bzw. am hinteren Tragprofil **7** im Detail ersichtlich. Die beiden Tragprofile **6** und **7** weisen jeweils eine zweiteilige Unterseite **16** bzw. **17** auf, mit der diese auf der dachparallelen Montagefläche **12** bzw. **13** besonderer Adapterelemente **10 b** bzw. **11 b** dachparallel aufgesetzt sind. Jede der Trapezblechschellen **10 a** bzw. **11 a** ist ein solches Adapterelement **11 a** bzw. **11 b** zugeordnet und bildet zusammen mit diesem eine Halteeinheit. Mit mindestens zwei dieser Halteeinheiten ist das Tragprofil **6** bzw. **7** auf dem Trapezblech **1** montiert. Außerdem ist im jeweils unteren Bereich der Tragprofile **6** und **7** eine hinterschnittene Längsnut **14** bzw. **15** integriert, deren Öffnung die Unterseite **16** bzw. **17** in ihre zwei Teile unterteilt und welche zur Fixierung mit einem Haken **18** bzw. **19** der Adapterelemente **10 b** bzw. **11 b** zusammenwirkt. Ein derartiges Adapterelement ist in DE 20 2008 028 108 A1 der Anmelderin bereits ausführlich beschrieben. Dort kann auch die Art und Weise entnommen werden, wie Tragprofile, die wie hier eine hinterschnittene Längsnut aufweisen, mittels eines solchen Adapterelements auf Trapezblechschellen oder an anderen Bauteilen befestigt werden können. Diese Schrift gilt daher in die vorliegende Beschreibung als einbezogen. Auch wenn derartige Adapterelemente für die erfindungsgemäße Schräganordnung bevorzugt sind, ist es alternativ ebenso möglich, das Tragprofil **6** bzw. **7** direkt auf herkömmlichen Trapezblechschellen mit dachparallelem Montageflansch aufzusetzen, wie sie unter anderem aus DE 20 2008 007 838 U1 der Anmelderin bekannt sind. Andere geeignete Befestigungsmittel, auch für Tragprofile ohne Längsnuten an deren Unterseiten, sind ebenso denkbar.

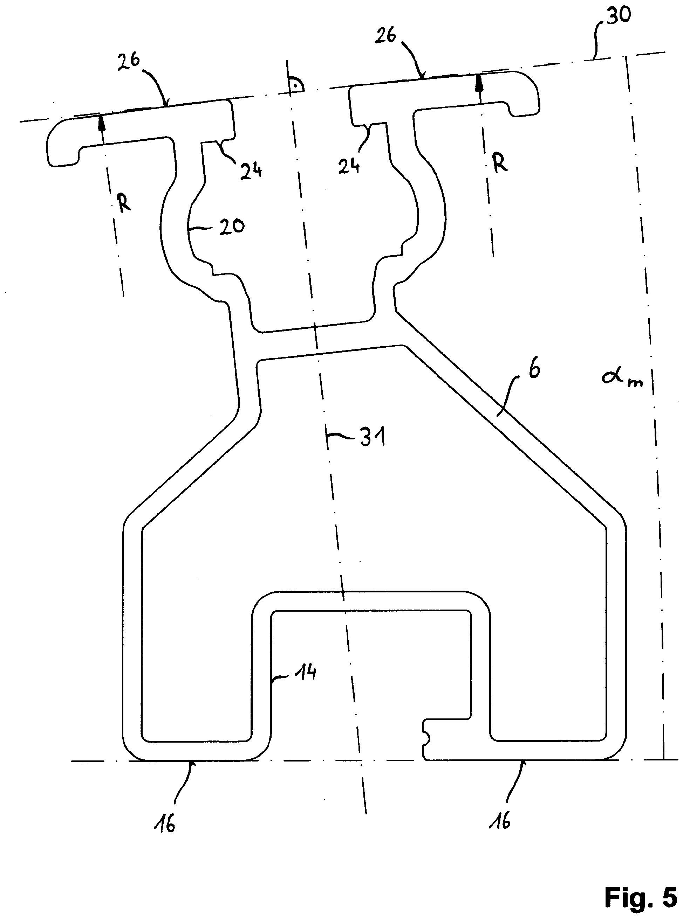

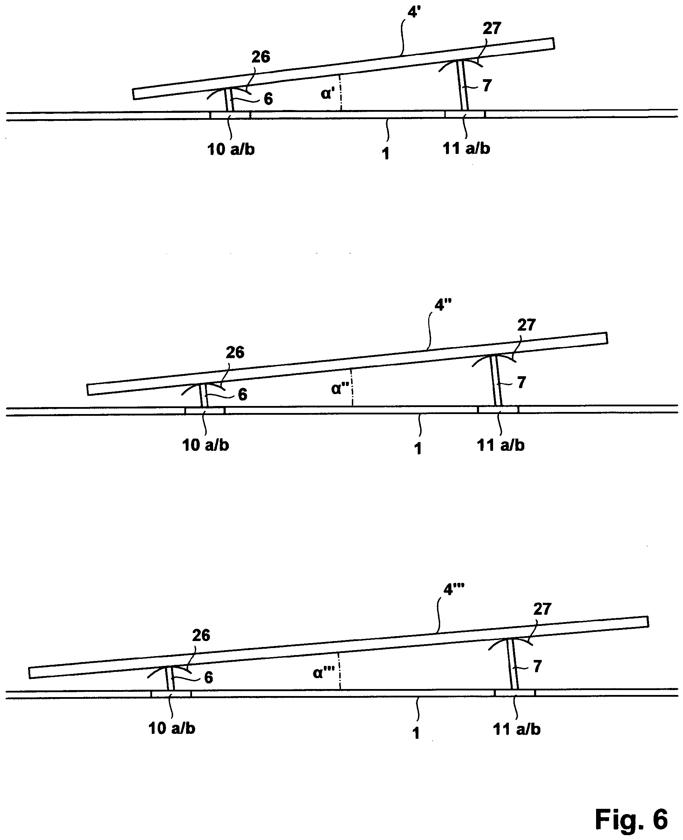

Weiter ist in **Fig. 3** und **Fig. 4** näher ersichtlich, dass die beiden Tragprofile **6** und **7** jeweils eine den Unterseiten **16** und **17** gegenüberliegende, ebenfalls zweiteilige Oberseite **26** bzw. **27** aufweisen, auf der das PV-Modul **4** bzw. dessen Rahmen **5** aufliegt. Im jeweils oberen Bereich des Tragprofils **6** bzw. **7** ist ebenfalls jeweils eine hinterschnittene Längsnut **20** bzw. **21** integriert. Diese Längsnuten **20** und **21,** deren Öffnung die Oberseite **26** bzw. **27** in ihre zwei Teile trennt, sind wie aus dem Stand der Technik bekannt zur Befestigung der Modulklemmen **8** mittels einer Schraubverbindung **22** bzw. **23** vorgesehen. Die Schraubverbindung **22** bzw. **23** führt dabei jeweils durch eine Bohrung in der Klemme **8** und endet an einer Nutmutter, die in die hinterschnittene Längsnut **20** bzw. **21** zum Kontern eingesetzt ist. Wesentlich an den Oberseiten **26** und **27** ist, dass diese gegenüber den Unterseiten **16** und **17** geneigt sind, damit das PV-Modul **4** dort in statisch günstiger Weise schräg von den Tragprofilen **6** und **7** getragen werden kann. Wie nachfolgend anhand **Fig. 5** erläutert wird, weisen die Oberseiten **26** und **27** zudem eine besondere Form auf, welche sich nicht nur für einen einzigen Winkel **a,** sondern für einen Winkelbereich von etwas mehr als **α ±** 1° eignet. Wie in **Fig. 6** veranschaulicht ist, können die Tragprofile **6** und **7** dadurch universal für unterschiedliche Modulformate und Winkel **α** eingesetzt werden.

In **Fig. 5** ist das vordere Tragprofil **6** noch einmal separat dargestellt. Die Neigung der Oberseite **26** gegenüber der Unterseite **16** ist wieder deutlich zu erkennen. Die Oberseite **26** ist außerdem nicht plan, sondern im Querschnitt bzw. quer zur Längsrichtung kaum sichtbar leicht gerundet. Zu erkennen ist diese Rundung am geringfügig nach außen hin zunehmenden Abstand zwischen der Oberseite **26** und einer gedachten mittleren Auflageebene **30,** welche die Oberseite **26** in der Mitte der Nutöffnung tangential berührt und bei der Schräganordnung gemäß **Fig. 2** mit der planen Unterseite des Rahmens **5** des PV-Moduls **4** zusammenfällt. Die Rundung weist einen konstanten Radius **R** auf, sodass die Oberseite **26** mit ihren zwei schmalen Teilen beidseitig der oberen Längsnut **20** die Mantelfläche eines gedachten Kreiszylinders beschreibt. In diesem Ausführungsbeispiel beträgt der Radius **R** rund 600 mm, wobei selbstverständlich auch andere geeignete Radien und andere als kreisförmige, beispielsweise elliptische Rundungen möglich sind. Wesentlich ist, dass aufgrund dieser Rundung das PV-Modul **4** bzw. sein Rahmen **5** auf der Oberseite **26** in unterschiedlichen Winkeln **α** jeweils tangential oder zumindest quasi tangential aufliegen kann, was in **Fig. 6** anhand dreier Anordnungs-möglichkeiten näher erläutert wird.

Der in **Fig. 5** dargestellte Winkel **αₘ** zwischen der mittleren Auflageebene **30** und der Unterseite **16** entspricht einem mittleren Winkel, von dem aus eine Abweichung von etwas mehr als ± 1° möglich ist. Ist das PV-Modul **4** wie in **Fig. 2** genau in dem Winkel **αₘ** gegenüber dem Flachdach **1** geneigt, so liegt dessen Rahmen **5** quasi tangential so auf, dass es die beiden Randbereiche seitlich der Öffnung der oberen Längsnut **20** gleichermaßen berührt. Dieser Fall entspricht der bevorzugten Anordnungsweise, bei der die Verschraubung **22** gemäß **Fig. 3** senkrecht in die Längsnut **20** führt und die Nutmutter parallel an der Unterseite des Hinterschnitts der Längsnut **20** ansetzt. Beim Spannen der Schraubverbindung **22** werden die an der Unterseite des Hinterschnitts angeformten keilförmigen Stege **24** von der Nutmutter gleichermaßen zusammengedrückt. Nimmt das PV-Modul **4** gegenüber dem Flachdach **1** hingegen einen anderen Winkel als **αₘ** ein, so ist die Modulklemme **8** und damit auch die Schraubverbindung geringfügig aus der Senkrechten der Längsnut **20** verschwenkt, sodass die Nutmutter leicht schräg an der Unterseite des Hinterschnitts ansetzt und die keilförmigen Stege **24** zum Ausgleich der Schrägstellung unterschiedlich plastisch verformt werden können. Für einen statisch günstigen Lastabtrag im Tragprofil **6** ist es zudem wichtig, dass eine zum PV-Modul **4** gedachte senkrechte Ebene **31** sowohl durch dessen obere als auch durch dessen untere Längsnut **20** bzw. **14** verläuft. Bei der vorbeschriebenen bevorzugten Anordnungsweise nimmt die senkrechte Ebene **31** auch zur mittleren Auflageebene **30** einen rechten Winkel ein. Da die Oberseite **27** des hinteren Tragprofils **7** identisch ausgeführt ist, kann auf eine gesonderte Darstellung und Beschreibung verzichtet werden. Auch am hinteren Tragprofil **7** verläuft trotz der größeren Stützhöhe eine Senkrechte zum PV-Modul **4** sowohl durch die obere als auch durch die untere Längsnut **21** bzw. **15.**

Schließlich zeigt **Fig. 6** stark schematisierte Seitenansichten auf drei unterschiedliche Anordnungsmöglichkeiten der Schräganordnung gemäß **Fig. 1****.** Es wird veranschaulicht, wie mit demselben Satz aus vorderem und hinterem Tragprofil **6** und **7** drei verschieden große PV-Module **4', 4"** und **4'"** trotz ihrer unterschiedlichen Seitenlänge dennoch statisch günstig auf dem Flachdach **1** anordenbar sind. So kann die in der Seitenansicht erkennbare Seitenlänge des PV-Moduls **4'** beispielsweise 1.300 mm, die des PV-Moduls **4"** 1.600 mm und die des PV-Moduls **4'"** 1.900 mm betragen. Weil die Tragprofile **6** und **7** das PV-Modul **4', 4"** bzw. **4'"** stets an Stellen geringer Durchbiegung tragen, d. h. wie zuvor anhand **Fig. 2** beschrieben um rund ein Viertel bis ein Fünftel der Modulseitenlänge nach innen versetzt sind, variiert auch der Parallelabstand zwischen den Tragprofilen **6** und **7** entsprechend. Und da die Stützhöhe der Tragprofile **6** und **7** unverändert bleibt, ergeben sich zwischen dem PV-Modul **4', 4"** bzw. **4'"** und dem Flachdach **1** unterschiedliche Winkel **α', a"** bzw. und **a"'.** So beträgt der Winkel **a"** bei der in der Mitte dargestellten Schräganordnung rund 6°. In der oberen Schräganordnung beträgt der Winkel **a'** aufgrund des kürzeren Parallelabstands zwischen den beiden Tragprofilen **6** und **7** hingegen rund 7°. Und in der unteren Schräganordnung ist wegen der großen Modulseitenlänge ein entsprechend großer Parallelabstand gegeben, sodass sich ein Winkel **a'"** von rund 5° ergibt.

Wichtig ist, dass das PV-Modul **4', 4"** bzw. **4'"** bei allen drei Schräganordnungen aufgrund der hier lediglich symbolisch dargestellten Rundung der Oberseite **26** bzw. **27** trotz unterschiedlichen Winkels **α', a"** und **a'"** stets tangential oder zumindest quasi tangential auf den Tragprofilen **6** und **7** aufliegen kann. Mit anderen Worten ist die Oberseite **26** bzw. **27** des Tragprofils **6** bzw. **7** in dem Bereich, in dem das PV-Modul **4', 4"** bzw. **4'"** bzw. dessen Rahmen dort aufliegt, genau in dem Winkel **α', a"** und **a'"** geneigt, der zwischen dem PV-Modul **4', 4"** bzw. **4'"** und dem Flachdach **1** gegeben ist. Die in der Mitte gezeigte Schräganordnung entspricht dabei derjenigen gemäß **Fig. 1** und **Fig. 2****,** weil auch dort die in **Fig. 5** gezeigte mittlere Auflageebene **30** der Oberseite **26** bzw. **27** gegenüber der Unterseite des Tragprofils **6** bzw. **7** um denselben Winkel **a"** geneigt ist wie das PV-Modul **4'** gegenüber dem Flachdach **1.** Die mittlere Auflageebene **30** fällt auch hier mit der Unterseite des PV-Moduls **4'** bzw. dessen Rahmen zusammen, weshalb diese Anordnungsweise auch als Mittelstellung bezeichnet werden kann.

## Patentansprüche

1. Schräganordnung von Photovoltaik-Modulen auf einem Flachdach, umfassend ein vorderes und ein hinteres Tragprofil (6, 7), die mittels am Flachdach (1) befestigter Halter (10 a/b, 11 a/b) in einem Parallelabstand auf dem Flachdach (1) montiert sind, wobei das vordere Tragprofil (6) mit seiner Unterseite (16) auf mindestens zwei der Halter (10 a/b, 11 a/b) dachparallel aufgesetzt ist, wobei das hintere Tragprofil (7) mit seiner Unterseite (17) auf mindestens zwei der Halter (11 a/b) dachparallel aufgesetzt ist, und das vordere und das hintere Tragprofil (6, 7) mit ihrer jeweils einen Oberseite (26, 27) zusammen ein PV-Modul (4, 5) in einem Winkel α gegenüber dem Flachdach (1) schräg tragen, wobei zwischen der Unterseite (17) und der Oberseite (27) des hinteren Tragprofils (7) eine größere Stützhöhe vorgesehen ist als beim vorderen Tragprofil (6) und die Oberseiten (26, 27) beider Tragprofile (6, 7) in den Bereichen, in denen das PV-Modul (4, 5) dort aufliegt, im Winkel α gegenüber den Unterseiten (16, 17) geneigt sind, wobei in der Unterseite (16, 17) und/oder in der Oberseite (26, 27) mindestens eines Tragprofils (6, 7) eine hinterschnittene Längsnut (14, 15, 20, 21) integriert ist.

2. Schräganordnung nach Anspruch 1, **dadurch gekennzeichnet, dass** der Winkel α zwischen 3° und 13°, bevorzugt zwischen 5° und 8° beträgt.

3. Schräganordnung nach Anspruch 1, **dadurch gekennzeichnet, dass** in der Unterseite (16, 17) und in der Oberseite (26, 27) mindestens eines Tragprofils (6, 7) je eine hinterschnittene Längsnut (14, 15, 20, 21) integriert ist, wobei eine zum PV-Modul (4) gedachte senkrechte Ebene (31) beide Längsnuten (14, 15) der Länge nach schneidet.

4. Schräganordnung nach Anspruch 1, **dadurch gekennzeichnet, dass** die Oberseiten (26, 27) der Tragprofile (6, 7) gerundet sind, sodass das PV-Modul (4, 5) dort tangential oder im Wesentlichen tangential aufliegt.

5. Schräganordnung nach Anspruch 1 und 4, **dadurch gekennzeichnet, dass** die Oberseiten (26, 27) der Tragprofile (6, 7) mit einem Radius R zwischen 300 mm und 900 mm, bevorzugt zwischen 500 mm und 700 mm gerundet sind.

6. Schräganordnung nach Anspruch 1, **dadurch gekennzeichnet, dass** die Halter (10 a/b, 11 a/b) jeweils eine dachparallele Montagefläche (12, 13) aufweisen, auf welcher das jeweilige Tragprofil (6, 7) mit seiner Unterseite (16, 17) dachparallel aufgesetzt ist.

7. Schräganordnung nach Anspruch 1 oder 6, **dadurch gekennzeichnet, dass** das Flachdach (1) ein Trapezblechdach ist und die Halter (10 a, 11 a) Trapezblechschellen umfassen.

8. Schräganordnung nach Anspruch 1 mit 6 oder 7, **dadurch gekennzeichnet, dass** die Halter Halteadapter (10 b, 11b) umfassen, auf denen das jeweilige Tragprofil (6, 7) mit seiner hinterschnittenen Längsnut (14, 15) eingehakt und festgespannt werden kann.

9. Schräganordnung nach Anspruch 1, **dadurch gekennzeichnet, dass** die Tragprofile (6, 7) das PV-Modul (4, 5) an Stellen geringer Durchbiegung tragen.

10. Schräganordnung nach Anspruch 1, **dadurch gekennzeichnet, dass** die Tragprofile (6, 7) das PV-Modul (4, 5) an Stellen tragen, die vom jeweiligen Ende des PV-Moduls (4, 5) um rund ein Viertel bis ein Fünftel einer Seitenlänge nach innen versetzt sind.

## Claims

1. An inclined arrangement of photovoltaic modules on a flat roof, comprising a front and a rear support profile (6, 7) that are mounted with parallel spacing on the flat roof (1) by means of mountings (10 a/b, 11 a/b) that are fastened to the flat roof (1), wherein the front support profile (6) with its bottom side (16) is placed, in parallel with the roof, on at least two of the mountings (10 a/b, 11 a/b), wherein the rear support profile (7) with its bottom side (17) is placed, in parallel with the roof, on at least two of the mountings (11 a/b), and the front and the rear support profiles (6, 7) with their respective top side (26, 27) together support a PV module (4, 5) at an angle α with respect to the flat roof (1), wherein a greater support height is provided between the bottom side (17) and the top side (27) of the rear support profile (7) than for the front support profile (6), and the top sides (26, 27) of the two support profiles (6, 7) are inclined at an angle α with respect to the bottom sides (16, 17) in the areas in which the PV module (4, 5) rests, wherein an undercut longitudinal groove (14, 15, 20, 21) is integrated into the bottom side (16, 17) and/or into the top side (26, 27) of at least one support profile (6, 7).

2. The inclined arrangement according to Claim 1, **characterized in that** the angle α is between 3° and 13°, preferably between 5° and 8°.

3. The inclined arrangement according to Claim 1, **characterized in that** an undercut longitudinal groove (14, 15, 20, 21) is integrated in each case into the bottom side (16, 17) and into the top side (26, 27) of at least one support profile (6, 7), wherein an imaginary plane (31) perpendicular to the PV module (4) intersects both longitudinal grooves (14, 15) lengthwise.

4. The inclined arrangement according to Claim 1, **characterized in that** the top sides (26, 27) of the support profiles (6, 7) are rounded so that the PV module (4, 5) rests tangentially or essentially tangentially at that location.

5. The inclined arrangement according to Claims 1 and 4, **characterized in that** the top sides (26, 27) of the support profiles (6, 7) are rounded with a radius R between 300 mm and 900 mm, preferably between 500 mm and 700 mm.

6. The inclined arrangement according to Claim 1, **characterized in that** the mountings (10 a/b, 11 a/b) each have a mounting surface (12, 13), in parallel with the roof, on which the particular support profile (6, 7) is placed with its bottom side (16, 17) in parallel with the roof.

7. The inclined arrangement according to Claim 1 or 6, **characterized in that** the flat roof (1) is a trapezoidal sheet metal roof, and the mountings (10 a, 11 a) include trapezoidal sheet metal brackets.

8. The inclined arrangement according to Claim 1 with Claim 6 or 7, **characterized in that** the mountings include mounting adapters (10 b, 11 b) on which the particular support profile (6, 7) with its undercut longitudinal groove (14, 15) may be hooked and secured.

9. The inclined arrangement according to Claim 1, **characterized in that** the support profiles (6, 7) support the PV module (4, 5) at locations with little sag.

10. The inclined arrangement according to Claim 1, **characterized in that** the support profiles (6, 7) support the PV module (4, 5) at locations that are offset inwardly from the particular end of the PV module (4, 5) by approximately one-fourth to one-fifth the length of the side.

## Revendications

1. Agencement de modules photovoltaïques en biais sur toiture plate, comprenant un profilé de support avant et un profilé de support arrière (6, 7) qui sont montés sur la toiture plate (1) de façon parallèle et à distance l'un de l'autre à l'aide de supports (10 a/b, 11 a/b) fixés sur la toiture plate, le profilé de support avant (6) étant monté parallèlement à la toiture (1) et reposant avec sa face inférieure (16) sur au moins deux des supports (10 a/b, 11 a/b), le profilé de support arrière (7) étant monté parallèlement à la toiture (1) et reposant avec sa face inférieure (17) sur au moins deux des supports (11 a/b), et le profilé de support avant et le profilé de support arrière (6, 7) supportant ensemble avec leur face supérieure (26, 27) respective un module photovoltaïque (4, 5) en biais selon un angle α par rapport à la toiture plate (1), une hauteur de support supérieure à celle présente au profilé de support avant (6) étant prévue entre la face inférieure (17) et la face supérieure (27) du profilé de support arrière (7) et les faces supérieures (26, 27) des deux profilés de support (6,7) étant inclinées selon un angle α par apport aux faces inférieures (16, 17) dans les zones où repose le module photovoltaïque (4, 5), une rainure longitudinale en contre-dépouille (14, 15, 20, 21) étant ménagée dans la face inférieure (16, 17) et/ou dans la face supérieure (26, 27) d'au moins un profilé de support (6, 7).

2. Agencement en biais selon la revendication 1, **caractérisé en ce que** l'angle α est compris entre 3 et 13°, préférentiellement entre 5 et 8°.

3. Agencement en biais selon la revendication 1, **caractérisé en ce qu'**une rainure longitudinale en contre-dépouille (14, 15, 20, 21) est respectivement ménagée dans la face inférieure (16, 17) et dans la face supérieure (26, 27) d'au moins un profilé de support (6, 7), un plan vertical imaginaire (31) par rapport au module photovoltaïque (4) coupant dans le sens de la longueur les deux rainures longitudinales (14, 15).

4. Agencement en biais selon la revendication 1, **caractérisé en ce que** les faces supérieures (26, 27) des profilés de support (6, 7) sont arrondies de sorte que le module photovoltaïque (4, 5) repose sur lesdits profilés de manière tangentielle ou sensiblement tangentielle .

5. Agencement en biais selon la revendication 1 et la revendication 4, **caractérisé en ce que** les faces supérieures (26, 27) des profilés de support (6, 7) sont arrondies selon un rayon R compris entre 300 et 900 mm, préférentiellement entre 500 et 700 mm.

6. Agencement en biais selon la revendication 1, **caractérisé en ce que** les supports (10 a/b, 11 a/b) présentent chacun une surface de montage (12, 13) parallèle à la toiture sur laquelle le profilé de support (6, 7) correspondant repose avec sa face inférieure (16, 17) parallèlement à la toiture.

7. Agencement en biais selon la revendication 1 ou 6, **caractérisé en ce que** la toiture plate (1) est une toiture en tôle trapézoïdale et que les supports (10 a, 11a) comportent des colliers de serrage pour tôle trapézoïdale.

8. Agencement en biais selon la revendication 1 conjointement avec la revendication 6 ou 7, **caractérisé en ce que** les supports comportent des adaptateurs de support (10 b, 11 b) sur lesquels le profilé de support (6, 7) correspondant peut être accroché et bloqué à l'aide de sa rainure longitudinale en contre-dépouille (14, 15).

9. Agencement en biais selon la revendication 1, **caractérisé en ce que** les profilés de support (6, 7) supportent le module photovoltaïque (4, 5) en des endroits à faible flexion.

10. Agencement en biais selon la revendication 1, **caractérisé en ce que** les profilés de support (6, 7) supportent le module photovoltaïque (4, 5) en des endroits qui sont décalés vers l'intérieur de près d'un quart à un cinquième d'une longueur de côté par rapport à chacune des extrémités du module photovoltaïque (4, 5).
